# EUROPÄISCHE PATENTSCHRIFT

(11) **EP 2 729 363 B1**
(45) Veröffentlichungstag und Bekanntmachung des Hinweises auf die Patenterteilung: **14.11.2018**
(21) Anmeldenummer: 12783275.6
(22) Anmeldetag: 13.07.2012
(51) Int. Cl.: B64C 21/10

(54) **VERFAHREN ZUR HERSTELLUNG EINER OBERFLÄCHE EINES BAUTEILS MIT REDUZIERTEM LUFTSTRÖMUNGSWIDERSTAND UND BAUTEIL MIT REDUZIERTEM LUFTSTRÖMUNGSWIDERSTAND**
METHOD FOR PRODUCING A SURFACE OF A COMPONENT, SAID SURFACE HAVING REDUCED DRAG AND COMPONENT WITH REDUCED DRAG
PROCÉDÉ DE PRODUCTION D'UNE SURFACE D'ÉLÉMENT STRUCTURAL À RÉSISTANCE RÉDUITE À L'ÉCOULEMENT D'AIR ET ÉLÉMENT STRUCTURAL À RÉSISTANCE RÉDUITE À L'ÉCOULEMENT D'AIR

(30) Priorität: 05.07.2011 DE 102011106763
(43) Veröffentlichungstag der Anmeldung: 14.05.2014
(73) Patentinhaber: Airbus Defence and Space GmbH, 85521 Ottobrunn (DE)
(72) Erfinder: ROHR, Oliver, 85521 Ottobrunn (DE); GAMMEL, Franz, 85521 Ottobrunn (DE)
(74) Vertreter: Kastel, Stefan
(86) Internationale Anmeldenummer: PCT/IB2012/001934
(87) Internationale Veröffentlichungsnummer: WO 2013/005113

(56) Entgegenhaltungen:
- WO-A1-2010/017289
- US-A1- 2009 092 844
- US-A1- 2010 187 361

## Beschreibung

Die vorliegende Erfindung betrifft ein Verfahren zur Herstellung einer Oberfläche eines Bauteils mit reduziertem Luftströmungswiderstand. Insbesondere ist das Bauteil hierbei ein Strukturbauteil, wie es beispielsweise in Flugzeugen, Helikoptern, oder in Körpern vorkommt. Nach dem durchgeführten Verfahren weist die Oberfläche des Bauteils einen reduzierten Luftströmungswiderstand auf.

Die Verringerung des Treibstoffverbrauchs und die Reduzierung von Kohlenstoffdioxid / Stickstoffoxid (CO2/NOx) Emissionen sind wichtige zu erfüllende Ziele, insbesondere von der Luftfahrtindustrie oder Automobilindustrie. Neben Leichtbau zur Gewichtsreduzierung und Verbesserung des Wirkungsgrades von Antrieben, stellt die Reduzierung des Luftwiderstandes einen wesentlichen Baustein zur Erreichung dieser Ziele dar.

Verfahren zur Herstellung von Oberflächen, die den Luftströmungswiderstand reduzieren, sind bekannt. Es ist seit langem bekannt und in Ölkanalversuchen nachgewiesen, dass durch geeignete Strukturierung von festen Oberflächen der Widerstand von darüberströmender flüssiger oder gasförmiger Medien reduziert werden kann. Die Strukturierung der festen Oberfläche hat dabei unterschiedliche Formen und Größen. Aus Bechert, D.W. et al, Experiments on drag-reducing surfaces and their optimization with adjustable geometry, Journal of Fluid Mechanics, Vol. 338, pp. 59-97, 1997, ist bekannt eine strukturierte Kunststofffolie auf Körper aufzukleben.

Basierend darauf wurden von Luftfahrtunternehmen wie Airbus und Boeing Versuche durchgeführt, bei denen Kunststofffolien entsprechender Strukturierung von der Firma 3M, auf die Außenfläche eines Fluzeugs aufgeklebt waren. Bei Flugversuchen mit einem Großflugzeug, dessen Oberfläche zu 70% mit einer solchen Kunststofffolie beklebt war, konnte eine Widerstandsverminderung von 2% nachgewiesen werden (Szodruch J., Dziomba, B., Aircraft Drag Reduction Technologies, 29th Aerospace Science Meeting, Reno, Nevada, 07-10 Jan. 1991). Dies führte zu einer Treibstoffersparnis von 1,5% (Roberts J.P., Drag Reduction: An Industrial Challenge, Special Course on Skin Friction Drag Reduction, AGARD Report 786, 1992). Hochgerechnet auf die durchschnittliche Flugzeuglebensdauer ist dies eine Treibstoffersparnis ca. 10000 Tonnen Kerosin.

Die bislang verwendeten strukturierten Kunststofffolien haben aber nicht nur mangelnde mechanische Beständigkeit sondern weisen auch eine Degradation der Kunststofffolie und des Kleber auf, mit dem die Kunststofffolien am Flugzeug haften. Eine Folge der mangelnden mechanischen Beständigkeit ist beispielsweise die Verrundung des Spitzenradius sägezahnförmiger Strukturierung, die zu einer Aufhebung der reibungsvermindernden Wirkung führen kann. (Hage, W., Zur Widerstandsverminderung von dreidimensionalen Ribletstrukturen und anderer Oberflächen, Dissertation TU Berlin 2004). Die Degradation kann auch zu einer Ablösung der Kunststofffolien während des Betriebes führen.

Es ist auch bekannt, massive metallische Körper mit einer Oberflächenstrukturierung geeigneter Größenordnung herzustellen. Beispielsweise wird in DE10314373A1 ein Feingussverfahren beschrieben, mit dem Turbinenschaufeln aus Titanaluminiden (TiAl) mit strukturierter Oberfläche hergestellt werden. Auch ist die Strukturierung metallischer Oberflächen durch Laserbearbeitung oder Schleifen beispielsweise bekannt aus Oehlert et. Al., Exploratory Experiments on Machined Riblets for 2-D Compressor Blades, Proceeding of IMECE2007, 2007 ASME Internation Mechanical Engineering Congress and Exposition, November 11-15, 2007, Seattle, Washington, USA.

Eine solche direkte Strukturierung von Flugzeugstrukturen durch Gussverfahren oder abtragende Verfahren (Strukturierung durch Laser oder Mikrofräsen etc.) ist aber bei der erforderlichen Größe der Flächen der Flugzeuge, Helikopter oder anderem Fluggerät weder technisch noch wirtschaftlich anwendbar.

Darüber hinaus müssen Flugzeuge oder Helikopter aus faserverstärktem Kunststoff (FVK) gegen Blitzschlag speziell geschützt werden. Zum Einsatz kommen dafür in die FVK-Struktur einlaminierte stromleitende Metallnetze aus Kupfer oder Bronze. Auch einlaminierte Metalleinlagen, sogenannte "Expanded Foils", werden dafür verwendet. Es ist bekannt, dass Schäden durch Blitzeinwirkung umso größer sind, je dicker die organische, nichtleitende Schicht aus Matrixharz und Lack über der einlaminierten Metalleinlage ist.

Aus der WO2010/017289 A1 sind Metallbleche und Metallplatten mit reibreduzierenden Oberflächenstrukturen in Form von Riblets und Verfahren zum Herstellen derselben bekannt. Diese können zum Bilden von Teilen von Flugzeugen, wie z.B. Flügeln, verwendet werden.

Aus der US2010/0187361 A1 ist ein Array von aerodynamischen Riblets bekannt, das durch eine Mehrzahl von hochsteifen Spitzen gebildet ist, die durch eine Trägerschicht in vorbestimmter Anordnung gehalten werden und auf eine Flugzeugoberfläche geklebt werden.

Aus der US 2009/0092844 A1 ist ein Blitzschutzsystem für Flugzeuge bekannt, bei dem Verbundmaterialien aufgebaute Flugzeugkomponenten eine aufgeklebte Metallschicht aufweisen.

Es ist Aufgabe der Erfindung, ein Bauteil anzugeben, dessen Luftströmungswiderstand reduziert ist, wenn ein Fluid darüberströmt, das die Nachteile des Stands der Technik überwindet und kostengünstig einsetzbar ist bei geringem technischen Aufwand.

Diese Aufgabe wird mit einem Verfahren mit den Merkmalen des Anspruchs 1 gelöst. Bevorzugte Ausführungsformen sind in den abhängigen Ansprüchen angegeben.

Der Erfindung liegt der Gedanke zugrunde, eine Metallfolie vorzusehen, die strukturiert wird, so dass eine metallische Ribletfolie entsteht. Riblets sind mikroskopisch kleine Rillen auf der Oberfläche der Metallfolie. Die Ribletfolie wird auf ein Bauteil aufgebracht, um dessen Luftströmungswiderstand zu reduzieren. Insbesondere sind bei der Verwendung der Ribletfolie auf dem Bauteil, die Riblets im Wesentlichen parallel zur lokalen Strömung ausgerichtet. Die Verwendung der Ribletfolie schafft eine mechanisch beständige und langzeitlebige Oberfläche des Bauteils.

Mit anderen Worten ist es angedacht, unabhängig von Größe, Form oder Beschaffenheit des Bauteils dessen äußere Fläche so zu beschaffen, dass der Luftströmungswiderstand reduziert wird und die mechanische Beständigkeit der äußeren Fläche durch die Riblets erhöht wird. Durch Aufbringen der Ribletfolie auf das Bauteil wird der Luftströmungswiderstand reduziert. Dabei ist es möglich, die Ribletfolie auf Faserverbundbauteile aufzubringen. Sowohl die Dicke der Ribletfolie, als auch ihre Struktur ist an das Bauteil anpassbar, wobei die Größe und Form der Riblets als auch die Dicke der Ribletfolie variabel ist. Vorteilhaft ist die Dicke der Ribletfolie weniger als 500 µm und hat vorteilhaft eine Dicke zwischen 50 - 400 µm, insbesondere mindestens 200 µm. Die Dicke der Ribletfolie gewährleistet bei geringst möglichem Gewicht eine einfache Anpassung an die jeweilige Bauteilform.

Erfindungsgemäß ist ein Verfahren vorgesehen, das zur Herstellung eines Verbunds aus einer Ribletfolie und einem Faserverbundbauteil dient, wobei wenigstens eine Fläche der Ribletfolie den Luftströmungswiderstand reduziert. Eine Metallfolie beliebiger Größe und Form wird einer mechanischen Bearbeitung unterzogen, wobei eine Strukturierung der Metallfolie erfolgt, so dass eine Ribletfolie erzeugt wird. Die Ribletfolie umfasst auf wenigstens einer ihrer Flächen Riblets. Die Riblets sind so angeordnet, dass sie den Luftströmungswiderstand deutlich reduzieren, wenn ein Fluid darüberströmt. Bevorzugt sind die Riblets entlang der Störmungsrichtung des Fluids ausgerichtet. Wenigstens eine Fläche der Ribletfolie wird einer Oberflächenbehandlung unterzogen, so dass eine multifunktionale Schicht auf der Fläche erzeugt wird.

Die Metallfolie ist aus einem Werkstoff, der wenigstens alle Leichtmetalle in den Hauptgruppen oder Nebengruppen des Periodensystems, insbesondere Aluminium oder Titan umfasst. Selbstverständlich umfassen die Metalle auch Metalllegierungen die wenigstens eines der genannten Metalle einschließlich Lithium, Beryllium, Scandium oder Yttrium enthalten und insbesondere auch Stahllegierungen.

Aufgrund der den metallischen Ribletfolien imanenten elektrischen Leitfähigkeit übernehmen die äußerlich auf das Bauteil aufgebrachten strukturierten Ribletfolien zusätzlich zur Verringerung des Luftströmungswiderstandes die Funktion des Blitzschutzes. Durch die Übernahme der Funktion des Blitzschutzes kann das Einlaminieren von Metallnetzen oder "Expanded Foils" entfallen. Des Weiteren kann eine Decklackierung unter der Ribletfolie entfallen, so dass das Gewicht der Ribletfolie selbst kompensiert ist. Das heißt, dass beispielsweise bei der Ausrüstung eines Luftfahrzeuges mit einer Ribletfolie der Treibstoffverbrauch aufgrund des gleichbleibenden Gewichts des Luftfahrzeugs gleich bleibt und aufgrund der Riblets auf der Ribletfolie reduziert wird. Die Ribletfolie kann den Luftströmungswiderstand um bis zu ca. 10% reduzieren, was wiederum den Treibstoffverbrauch herabsetzt.

Als Werkstoff der Metallfolie können alle oben genannten Metalle/Metalllegierungen zum Einsatz kommen, bevorzugt Titan/-legierungen oder Stahllegierungen, insbesondere Aluminium/-legierungen. Das Strukturieren der Metallfolie durch mechanische Bearbeitung umfasst mechanische (Um)Formverfahren wie Walzen, Schleifen oder Laserbehandlung, vorzugsweise Walzen (einschließlich inkrementeller Verfahren wie das sogenannte "incremental rolling") oder Prägen.

Beim Umformen wird eine Struktur von einer Rolle oder Walze, auf die Metallfolie übertragen, so dass auf der Metallfolie eine Struktur von mikroskopisch kleine Rillen, den Riblets, auf der Oberfläche der Metallfolie entsteht. Die Rolle oder Walze weist dabei das Negativ der späteren Riblets auf. Die Übertragung der Struktur von der Rolle oder Walze auf die Metallfolie erfolgt beispielsweise durch abrollen der Rolle oder Walze auf der Metallfolie. Das Walzverfahren zur Herstellung von metallischen Riblets ist beispielsweise in Economical and Ecological Benefits of Processintegrated Surface Structuring, M. Thome, G. Hirt, Key Engineering Materials Vol. 344, 2007, pp 939-946 beschrieben, auf die Bezug genommen wird.

Beim Prägen wird die Ribletstruktur von einem Prägestempel- oder walze auf die Metallfolie übertragen. Der Prägestempel weist dabei ein Negativ der späteren Riblets auf. Das Strukturieren eines Bleches mit einem Prägestempel ist beispielsweise in DE 102008032618 A1 beschrieben, auf die Bezug genommen wird.

Strukturieren der Metallfolie durch Schleifen oder Laserbehandlung ist beispielsweise in Exploratory Experiments on Machined Riblets for 2-D compressor blades, Oehlert et.al, Proceedings of IMECE2007, 2007 ASME International Mechanical Engineering Congress and Exposition November 11-15, 2007, Seattle, Washington, USA, beschrieben, auf die Bezug genommen wird.

Im Gegensatz zu Kunststofffolien hat die Strukturierung der Metallfolie durch die mechanische Bearbeitung zusätzlich den Vorteil, dass das Metall verfestigt wird und damit die Widerstandsfähigkeit gegenüber mechanischer Belastung (z.B. durch Erosion, Regen, Hagel etc.) gesteigert ist.

Die Ribletfolie kann des Weiteren auch die Funktion eines Wärmeleiters übernehmen, so dass beispielsweise eine Eisbildung verhindert werden kann. Durch Erwärmen der metallischen Ribletfolie kann sich kein Eis bilden, was insbesondere bei Flugzeugen oder Helikoptern von Vorteil ist, weil es dann nicht zum Strömungsabriss infolge von Eisbildung kommen kann.

Erfindungsgemäß umfasst die Oberflächenbehandlung ein Anodisieren. Beim Anodisieren wird wenigstens eine Fläche der Ribletfolie in einen Elektrolyt getaucht und durch Anlegen einer elektrischen Spannung eine Oxidschicht auf der Fläche der Ribletfolie gebildet. Vorzugsweise beträgt die Dicke der Oxidschicht 0,1 bis 20 µm. Dies bewirkt eine Härtesteigerung und Verbesserung der Erosionsbeständigkeit der Ribletfolie.

Erfindungsgemäß hat die Oxidschicht eine porige Struktur. Diese Topographie gewährleistet eine innige Verzahnung beispielsweise eines Klebers, Klebeprimers oder Harzes mit der Ribletfolie aus Metall und gewährleistet die verbesserte Haftung und Langzeitbeständigkeit der Ribletfolie.

Vorteilhafterweise wird wenigstens auf die den Riblets gegenüberliegende Fläche der Ribletfolie ein Klebeprimer aufgetragen. Der Klebeprimer kann die Haftfestigkeit der Ribletfolie am Bauteil verbessern, so dass es beim Betrieb des Bauteils nicht zum Lösen der Ribletfolie vom Bauteil kommt. Dadurch ist eine langzeitbeständige Haftung zwischen Ribletfolie und Bauteil gewährleistet.

Das Auftragen eines Klebeprimers schützt die Oxidschicht vor Verletzungen oder Veränderungen, beispielsweise durch Kratzer beim Aufbringen der Ribletfolie auf das Bauteil. Auch erlaubt der aufgetragene Klebeprimer eine Lagerung oder Konfektionierung der Folie zwischen Herstellung und Aufbringung auf das Bauteil.

Die Oberflächenbehandlung der Fläche der Ribletfolie, die die Riblets aufweist, umfasst vorteilhafterweise eine Imprägnierung mittels einer wasser- und/oder schmutzabweisenden Flüssigkeit. Dies verhindert Kontamination durch Schmutz, Eisansatz oder ähnlichen Ablagerungen. Bevorzugt wird die Oxidschicht auf der die Riblets aufweisende Fläche imprägniert. Diese Funktionalisierung kann temporäre oder langzeitige Wirkung haben.

Insbesondere bei einer temporären Oberflächenbehandlung wird die Porenstruktur der Oxidschicht mit der wasser- und/oder schmutzabweisender Flüssigkeit imprägniert. Das Ausdiffundieren der Flüssigkeit aus den Poren bewirkt einen wasser- und/oder schmutzabweisenden Effekt. Nach dem Verbrauch der in den Poren gespeicherten Flüssigkeit kann die Wirksamkeit der Oberfläche der Ribletfolie durch Nachimprägnieren wiederhergestellt werden.

Eine Oberflächenbehandlung mit langzeitiger Wirkung auf der die Riblets aufweisende Fläche umfasst eine Einlagerung von wasser- und/oder schmutzabweisenden Feststoffen in die Porenstruktur. Auch eine Beschichtung von einigen Nanometern Dicke hat eine Langzeitwirkung, wobei die Beschichtung plasmaunterstützt sein kann.

Vorteilhafterweise werden beim Imprägnieren, Einlagern oder Beschichten fluorierte oder teilweise fluorierte Polymere oder modifizierte Silane verwendet.

Für die Herstellung der Ribletfolie ist es vorteilhaft, wenn die Ribletstrukturen trapezförmige, halbkreisförmige oder sägezahnförmige Strukturen umfassen. Diese, im Wesentlichen parallel zur Strömung ausgerichtet, reduzieren den Strömungswiderstand und erhöhen somit den Auftrieb beispielsweise den eines Flugzeuges, einer Turbinenschaufel, eines Helikopterblattes oder eines anderen Körpers. Vorteilhafterweise beträgt der Winkel zwischen Strömungsrichtung und Riblet weniger als 5°, bevorzugt in etwa 0°.

Die Ribletstrukturen umfassen einen Größenbereich mit einer Ribletbreite von etwa 20 µm bis 130 µm, bevorzugt 30 µm bis 80 µm, insbesondere 50 µm bis 60 µm. Die Riblethöhe umfasst einen Bereich von 50-100% der Ribletbreite. Die Riblethöhe kann gleich Ribletbreite sein oder eine Kombination aus einem der angegebenen Größenbereiche umfassen. Eine maximale Reduzierung der Wandreibung der Luftströmung ist erreichbar, wenn die Höhe wenigstens eines Riblets halb so groß ist wie der Abstand zu einem ihm benachbarten Riblet, wobei die Ribletstruktur so gestaltet sein kann, dass die einzelnen Riblets direkt aneinander grenzen, also formschlüssig sind, oder ein Abstand zwischen den einzelnen Riblets vorhanden sein kann. Eine maximale Reduzierung des Luftströmungswiderstandes ist erreichbar, wenn die Riblets zur lokalen Strömungsrichtung ausgerichtet sind.

Bei Verwendung der Ribletfolie zur Reduzierung des Luftströmungswiderstandes eines Bauteils, wobei die Ribletfolie mit einem der vorher beschriebenen Verfahren hergestellt ist, wird der Luftströmungswiderstand erniedrigt, wenn die Ribletfolie auf das Bauteil aufgebracht ist.

Das Aufbringen der Ribletfolie auf ein Bauteil erfolgt, wenn das Bauteil ganz oder teilweise aus Faserverbundwerkstoffen gefertigt ist, durch Aushärten (Co-Curing) der Ribletfolie mit dem Material des Faserverbundwerkstoffs. Vorteilhafterweise weist die Ribletfolie eine verbesserte Haftung zum Bauteil auf durch die innige Verzahnung zwischen dem Kleber, Klebeprimer oder Harzes mit der Ribletfolie einerseits und Bauteil andererseits mittels der porigen Oxidschicht.

Nachfolgend wird die Erfindung beispielhaft anhand von in den Figuren dargestellten Ausführungsbeispielen beschrieben. Zum einfacheren Verständnis wurde auf eine maßstabsgetreue Wiedergabe verzichtet.
Fig. 1 zeigt eine perspektivische Ansicht einer Ribletfolie;
Fig. 1a zeigt einen Querschnitt einer Ribletfolie mit sägezahnförmigen Riblets;
Fig. 1b zeigt einen Querschnitt einer Ribletfolie mit halbkreisförmigen Riblets;
Fig. 1c zeigt einen Querschnitt einer Ribletfolie mit trapezförmigen Riblets;
Fig. 2 zeigt eine Ribletfolie mit einer oberen und einer unteren Oxidschicht;
Fig. 3a zeigt einen Schnitt durch eine Oxidschicht aus Fig. 2;
Fig. 3b zeigt eine Draufsicht auf eine Oxidschicht aus Fig. 2;
Fig. 4a zeigt eine Vergrößerung des Ausschnitts A aus Fig. 2 vor der Imprägnierung;
Fig. 4b zeigt eine Vergrößerung des Ausschnitts A aus Fig. 2 nach der Imprägnierung;
Fig. 5 zeigt eine Vergrößerung des Ausschnitts B aus Fig. 2 nach Aufbringen der Ribletfolie auf ein Bauteil;
Fig. 6 zeigt eine Vergrößerung des Ausschnitts B aus Fig. 2 nach Aufbringen der Ribletfolie auf ein Faserverbundbauteil;
Fig. 7 zeigt eine Ribletfolie auf den Tragflächen eines Flugzeuges;
Fig. 8 zeigt die Herstellung einer Ribletfolie.

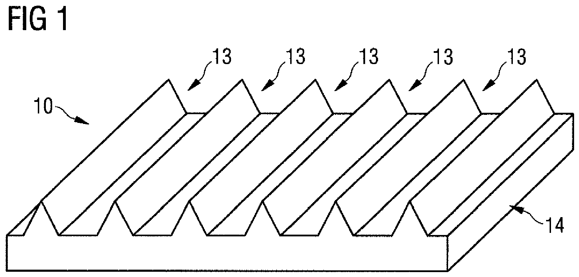

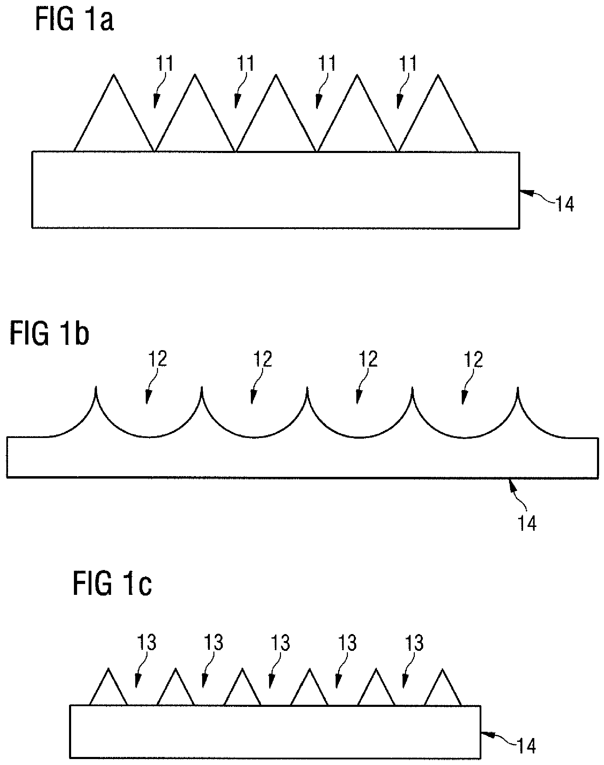

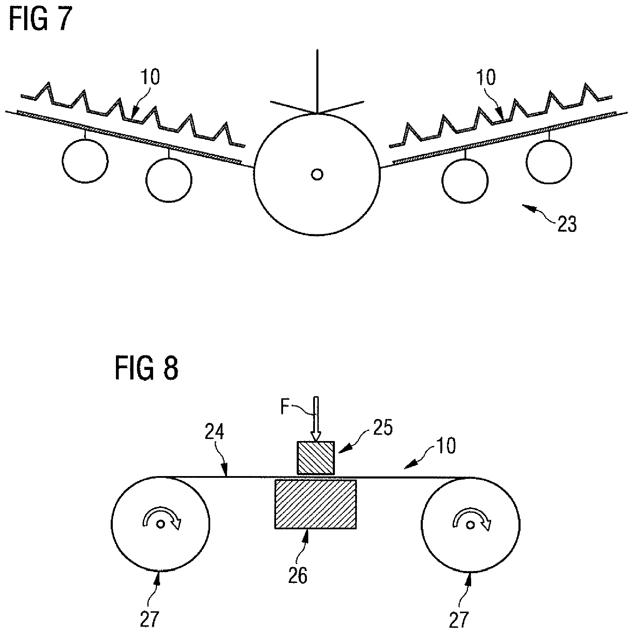

In Fig. 1 ist skizzenhaft eine perspektivische Ansicht einer Ribletfolie 10 gezeigt. Eine ursprünglich nicht strukturierte Metallfolie aus Aluminium weist nach einer mechanischen Bearbeitung (beispielsweise wie in Fig. 8 beschrieben) auf einer Seite eine strukturierte Oberfläche mit Riblets auf. Die Riblets sind mikroskopisch kleine Rillen auf der Oberfläche der Aluminiumfolie. In diesem Ausführungsbeispiel sind trapezförmige Riblets 13 auf der einen Seite der Aluminiumfolie geformt worden, so dass nach der mechanischen Bearbeitung auf einer Basis 14 der ursprünglichen Aluminiumfolie eine strukturierte Oberfläche mit trapezförmigen Riblets 13 entstanden ist. Die Dicke der Basis 14 beträgt 200 µm. Die trapezförmigen Riblets 13 erstrecken sich parallel über die Ribletfolie 10.

Selbstverständlich können die Riblets auch eine andere Form haben, beispielsweise wie in Fig. 1a-c beschrieben.

Ein Querschnitt einer Ribletfolie 10 mit sägezahnförmigen Riblets 11 ist in Fig. 1a gezeigt. Solche sägezahnförmige Riblets 11 erreichen eine Reduzierung des Luftströmungswiderstandes zwischen 5-6 %, wenn ein Fluid darüberströmt. Die Höhe der Riblets 11 gemessen von der Basis 14 aus beträgt 50 µm. Der Abstand zwischen zwei Spitzen der Riblets 11 beträgt 100 µm. Der Radius der Spitze beträgt 5% der Breite des Riblets 11, kann aber auch bis zu 10 % betragen.

Ein Querschnitt einer anderen Ribletfolie 10 mit halbkreisförmigen Riblets 12 ist in Fig. 1b gezeigt. Solche halbkreisförmige Riblets 12 erreichen eine Reduzierung des Luftströmungswiderstandes zwischen 7-8 %, wenn ein Fluid darüberströmt. Die Höhe der Riblets gemessen von der Basis 14 aus beträgt 30 µm. Der Abstand zwischen zwei Spitzen der Riblets 12 beträgt 60 µm. Der Radius der Spitze beträgt 2 % der Breite des Riblets 12.

Ein Querschnitt einer Ribletfolie 10 mit trapezförmigen Riblets 13 zeigt Fig. 1c. Die trapezförmigen Riblets 13 reduzieren den Luftströmungswiderstand eines Fluids, das über sie hinwegströmt, zwischen 7-8 %. Die Höhe der Riblets 13 gemessen von der Basis 14 aus beträgt 25 µm. Der Abstand zwischen zwei Spitzen der Riblets 13 beträgt 50 µm.

Maximale Reduktion des Luftströmungswiderstandes wird dann erzielt, wenn die Riblets 11, 12, 13 so angeordnet sind, dass sie lokal zur Strömung ausgerichtet sind. Der Winkel zwischen den Riblets 11, 12, 13 und der Strömungsrichtung beträgt dabei idealerweise 0°.

Außer mit Ribletfolien 10 aus Aluminium wurden vergleichbare Ergebnisse mit Ribletfolien aus Aluminiumlegierungen, Titan/-legierungen oder Stahllegierungen erzielt. Weil die Dichte von Aluminium/-legierungen eher niedrig ist, eignet sich dieses Material besonders, wenn die Ribletfolie 10 in Flugzeugen, Helikoptern oder anderen Körpern verwendet wird.

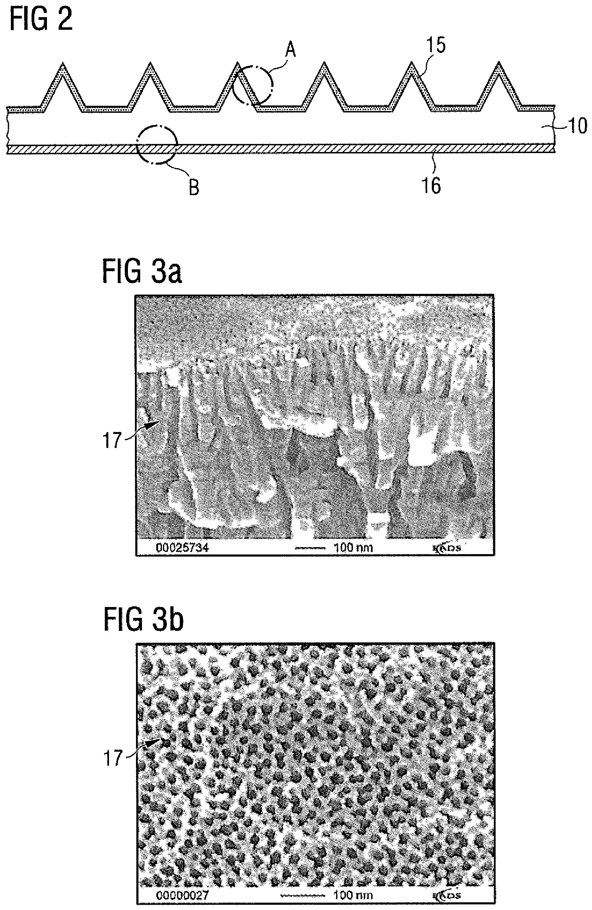

Fig. 2 zeigt eine Ribletfolie 10 mit einer oberen Oxidschicht 15 und einer unteren Oxidschicht 16. Die Oxidschichten 15, 16 sind das Ergebnis einer Oberflächenbehandlung. In diesem Ausführungsbeispiel wird mittels einer Phosphorsäure-Schwefelsäure-Anodisation eine Oxidschicht 15, 16, genauer eine Aluminiumoxidschicht auf beiden Seiten der Ribletfolie 10 erzeugt. Die Oxidschicht 15, 16 steigert die Härte der Ribletfolie 10. Dies bewirkt beispielsweise eine Verbesserung der Erosionsbeständigkeit.

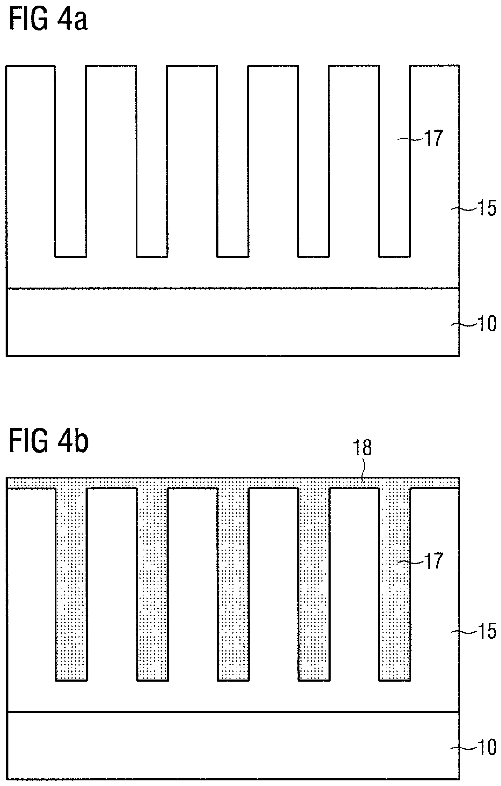

Die obere Oxidschicht 15 hat eine Struktur wie in Fig. 3a, b, gezeigt und wird zusätzlich imprägniert, vgl. Fig. 4a, b. Durch die Imprägnierung wird eine Kontamination durch Schmutz oder Eisansatz verhindert. Es entsteht eine langzeitbeständige Ribletfolie 10, die nahezu während der ganzen Lebensdauer eines Flugzeuges verwendet werden kann.

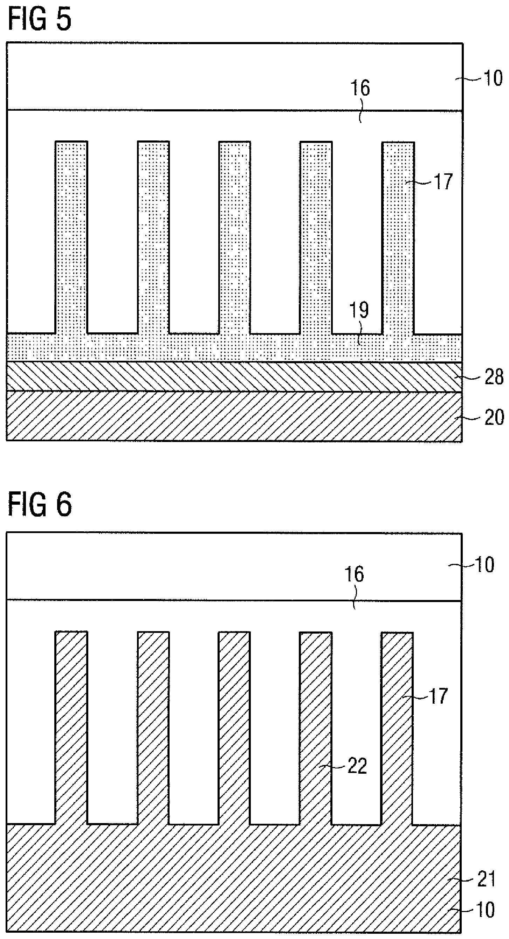

Die untere Oxidschicht 16 hat nach der Anodisation auch eine Struktur wie in Fig. 3a, b, gezeigt und weist zusätzlich einen Klebeprimer 19 auf, vgl. Fig. 5. Statt dem Klebeprimer kann auch ein Kleber verwendet werden. Durch die innige Verzahnung des Klebeprimers 19 mit der Ribletfolie 10 kann eine sehr gute Haftung zwischen einem Bauteil und der darauf angebrachten Ribletfolie 10 gewährleistet werden.

Das einseitige Auftragen des Klebeprimers 19 auf die dem Bauteil zugewandte Seite der Ribletfolie 10 schützt die untere Oxidschicht 16 vor Beschädigung. Des Weiteren kann die Ribletfolie 10 zwischen ihrer Herstellung und der Aufbringung am Bauteil, beispielsweise einer Turbinenschaufel oder einer Tragfläche eines Flugzeuges, einfacher gelagert und an das Bauteil angepasst werden.

Fig. 3a zeigt einen Schnitt durch eine Oxidschicht aus Fig. 2. Die durch die Anodisation gebildete Oxidschicht ist deutlich sichtbar. Die Topographie der Schicht zeigt eine Porenstruktur mit Poren 17 verschiedener Größe und Tiefe. Die Porenöffnung beträgt zwischen 10-30nm mit einer Porentiefe von bis zu 300nm.

Fig. 3b zeigt eine Draufsicht auf eine Oxidschicht aus Fig. 2.

Fig. 4a zeigt eine Vergrößerung des Ausschnitts A aus Fig. 2 vor der Imprägnierung. Auf dem Aluminiumwerkstoff der Ribletfolie 10 hat sich durch Anodisation eine Oxidschicht 15 ausgebildet. Die Oxidschicht 15 hat eine Porenstruktur. Die Poren 17 sind wie in Fig. 3a, b beschrieben. Der Einfachheit halber werden die Poren 17 in Fig. 4a als gleichmäßig ausgebildet gezeigt.

Fig. 4b zeigt eine Vergrößerung des Ausschnitts A aus Fig. 2 nach der Imprägnierung. Bei der Imprägnierung wird die Oxidschicht 15 mit einer Flüssigkeit gefüllt. Die Flüssigkeit diffundiert aus den Poren 17 und bewirkt so die wasser- oder schmutzabweisende Wirkung. Die Flüssigkeit wird in den Poren 17 gespeichert. Sobald die Flüssigkeit in den Poren 17 verbraucht wird, kann die Wirkung der Oxidschicht durch Nachimprägnieren wiederhergestellt werden.

Anstatt oder zusätzlich zu der Imprägnierung können auch wasser- oder schmutzabweisenden Feststoffe in die Poren 17 eingelagert werden oder es kann eine plasmaunterstützte Beschichtung in der Größenordnung von ca. 50 -100 nm verwendet werden. Die Einlagerung oder Beschichtung bietet den Vorteil, dass die abweisende Wirkung langlebig und langzeitbeständig ist.

Als Flüssigkeiten, Beschichtungsstoffe oder feste Stoffe eignen sich fluorierte Polymere oder modifizierte Silane.

Fig. 5 zeigt eine Vergrößerung des Ausschnitts B aus Fig. 2 nach Aufbringen der Ribletfolie 10 auf ein Bauteil 20. Das Bauteil 20 ist beispielsweise ein Tragflügel eines Flugzeugs.

Nach der Anodisation ist eine untere Oxidschicht 16 auf der dem Bauteil zugewandte Seite der Ribletfolie 10 entstanden. Die Oxidschicht 16 weist eine Porenstruktur auf wie in Fig. 3a, b beschrieben. Der Klebeprimer 19 diffundiert in die Poren 17 und bedeckt die Oberfläche der Oxidschicht 16. Wenn die Ribletfolie 10 auf das Bauteil 20 aufgebracht wird, verklebt der Kleber 28 über den Klebeprimer 19 die Ribletfolie 10 mit dem Bauteil. Es entsteht eine innige Verzahnung (form- und kraftschlüssige Verbindung) zwischen dem Bauteil 20 und der Ribletfolie 10 über den Klebeprimer in den Poren 17 in der Oxidschicht 16.

Die Verzahnung zwischen einem Faserverbundbauteil 21 und einer Ribletfolie wird als Vergrößerung des Ausschnitts B aus Fig. 2 in Fig. 6 gezeigt. Die Ribletfolie 10, die eine untere Oxidschicht 16 auf der dem Bauteil zugewandten Seite aufweist, wird auf ein Faserverbundbauteil 21 vor dem Aushärten ("co-curing" auf Englisch) desselben aufgebracht. Bei der Herstellung des Verbunds aus Ribletfolie 10 und Faserverbundbauteil 21 dringt flüssiges Harz 22 in die Poren der Oxidschicht 16. Beim Aushärten verbleibt das Harz in den Poren und wird fest. Nach dem Aushärten entsteht so eine form- und kraftschlüssige Verbindung zwischen der Ribletfolie 10 und dem Faserverbundbauteil 21.

Fig. 7 zeigt eine Ribletfolie 10 aus einem der vorigen Ausführungsbeispiele auf den Tragflächen eines Flugzeuges 23. Der Einfachheit halber wurde eine nichtmaßstabsgetreue Darstellung gewählt. Die Ribletfolie 10 ist so auf der Tragfläche des Flugzeuges 23 aufgebracht, dass die Strömungsrichtung im Wesentlichen parallel zu den Riblets 13 verläuft. In einer nicht gezeigten Darstellung erstrecken sich die Riblets 13 von der Vorderkante bis zur Hinterkante über die Ober- und Unterseite der Tragfläche. In der gezeigten Darstellung ist die Ribletfolie 10 nur auf die Oberseite der Tragfläche aufgebracht. Genauso ist es möglich die Ribletfolie 10 auf dem Rumpf des Flugzeugs oder auf andere Teile aufzubringen, bei denen eine Reduzierung des Luftströmungswiderstandes erwünscht ist.

Fig. 8 zeigt die Herstellung einer Ribletfolie 10 in einer Seitenansicht. Eine Metallfolie 24, beispielsweise aus Aluminium/-legierung, Titan/-legierung oder einer Stahllegierung, wird aufgerollt auf einer Rolle 27 bereitgestellt. Die Metallfolie 24 ist nicht strukturiert. Die Länge der Metallfolie 24 ist beliebig. Die Breite der Metallfolie 24 ist auch beliebig und ist in diesem Ausführungsbeispiel abhängig von der Breite der Rolle 27.

Auf die Metallfolie 24 wird mit einem Prägestempel 25 eine Ribletstruktur, wie in Fig. 1a-c aufgebracht. Während des Prägens wird die vom Prägestempel 25 aufgebrachte Kraft F von einem Gegenhalter 26 aufgenommen. Der Prägestempel 25 weist ein Negativ der zu erzeugenden Ribletstruktur auf.

Die fertige Ribletfolie 10 wird auf einer anderen Rolle 27 aufgerollt.

### Bezugszeichenliste

- 10: Ribletfolie
- 11: sägezahnförmige Riblets
- 12: halbkreisförmige Riblets
- 13: trapezförmige Riblets
- 14: Basis
- 15: obere Oxidschicht
- 16: untere Oxidschicht
- 17: Pore
- 18: Imprägnierschicht
- 19: Klebeprimer
- 20: Bauteil
- 21: Faserverbundbauteil
- 22: Harz
- 23: Flugzeug
- 24: Metallfolie
- 25: Prägestempel
- 26: Gegenhalter
- 27: Rolle
- 28: Kleber

## Patentansprüche

1. Verfahren zur Herstellung eines Verbunds aus einer Ribletfolie (10), deren wenigstens eine Fläche den Luftströmungswid erstand reduziert, und eines Faserverbundbauteils (20, 21), umfassend:
- Bereitstellen einer Metallfolie (24);
- Strukturieren der Metallfolie (24) durch mechanische Bearbeitung, so dass eine Ribletfolie (10) mit einer Dicke zwischen 50 - 400 µm gebildet wird, die wenigstens auf einer Fläche Riblets (11, 12, 13) umfasst, wobei die Riblets (11, 12, 13) so angeordnet sind, dass sie den Luftströmungswiderstand reduzieren, wenn ein Fluid darüber strömt;
- Oberflächenbehandlung wenigstens einer Fläche der Ribletfolie (10), wobei die Oberflächenbehandlung Anodisieren der den Riblets (11, 12, 13) gegenüberliegenden Fläche umfasst, um eine Oxidschicht (16) mit einer Porenstruktur mit Poren (17) verschiedener Größe und Tiefe zu bilden, wobei die Porenöffnung zwischen 10-30 nm und die Porentiefe bis zu 300 nm beträgt, und
- Aufbringen der Ribletfolie (10) auf das Faserverbundbauteil (21) vor dem Aushärten desselben derart, dass flüssiges Harz (22) in die Poren (17) eindringt, beim Aushärten in den Poren (17) verbleibt und fest wird, so dass nach dem Aushärten eine form- und kraftschlüssige Verbindung zwischen Ribletfolie (10) und dem Faserverbundbauteil (21) entsteht.

2. Verfahren nach Anspruch 1, **dadurch gekennzeichnet, dass** die Oxidschicht (15) auf der die Riblets (11, 12, 13) aufweisenden Fläche mittels einer wasserabweisenden und/oder schmutzabweisenden Flüssigkeit imprägniert wird.

3. Verfahren nach einem der vorangehenden Ansprüche, **dadurch gekennzeichnet, dass** wenigstens auf der die Riblets (11, 12, 13) aufweisenden Fläche wasserabweisende und/oder schmutzabweisende Feststoffen in die Oxidschicht (15, 16) eingelagert werden.

4. Verfahren nach einem der vorangehenden Ansprüche, **dadurch gekennzeichnet, dass** bei wenigstens auf der die Riblets (11, 12, 13) aufweisenden Fläche die Oxidschicht (15, 16) mittels einer plasmaunterstützten Beschichtung beschichtet wird.

5. Verfahren nach einem der vorangehenden Ansprüche, **dadurch gekennzeichnet, dass** wenigstens auf der die Riblets (11, 12, 13) aufweisenden Fläche die Oxidschicht (15, 16) fluorierte Polymere oder modifizierte Silane umfasst.

6. Verfahren nach einem der vorangehenden Ansprüche, **dadurch gekennzeichnet, dass** die Ribletfolie (10) trapezförmige, halbkreisförmige, stromlinienförmige oder sägezahnförmige Riblets (11, 12, 13) umfasst.

7. Verfahren nach einem der vorangehenden Ansprüche, **dadurch gekennzeichnet, dass** die Riblets einen Größenbereich mit einer Ribletbreite von 30 µm bis 80 µm, insbesondere 50 µm bis 60 µm, speziell 60 µm umfassen.

8. Verfahren nach einem der vorangehenden Ansprüche, **dadurch gekennzeichnet, dass** die Höhe wenigstens eines Riblets (11, 12, 13) halb so groß ist wie der Abstand zu einem ihm benachbarten Riblet (11, 12, 13).

9. Bauteil (20) enthalten in einem Flugzeug, Helikopter oder Flugkörper, wobei auf dem Bauteil (20) wenigstens eine Ribletfolie mit dem Verfahren nach einem der voranstehenden Ansprüche aufgebracht ist.

## Claims

1. Method for producing a composite of a riblet foil (10) having at least one surface thereof which reduces air flow resistance and a fiber composite component (20, 21), the method comprising:
- preparing a metal foil (24);
- texturing the metal foil (24) by mechanical processing so that a riblet foil (10) with a thickness between 50 - 400 µm is formed which comprises riblets (11, 12, 13) on at least one surface thereof, the riblets (11, 12, 13) being arranged to reduce the air flow resistance when fluid flows there over;
- surface treatment of at least one surface of the riblet foil (10), the surface treatment comprising anodizing the surface opposite the riblets (11, 12, 13) to form an oxide layer (16) having a pore structure with pores (17) of different sizes and depths, the pore opening being between 10-30 nm and the pore depth being up to 300 nm and
- applying the riblet foil (10) to the fiber composite component (21) prior to curing thereof in such a way that liquid resin (22) penetrates into the pores (17), remains in the pores (17) during curing and becomes solid, so that after curing a positive and non-positive connection is formed between the riblet film (10) and the fiber composite component (21).

2. Method according to claim 1, **characterized in that** the oxide layer (15) on the surface having the riblets (11, 12, 13) is impregnated by means of a water-repellent and/or dirt-repellent liquid.

3. Method according to any one of the preceding claims, **characterized in that** water-repellent and/or dirt-repellent solids are incorporated into the oxide layer (15, 16) at least on the surface having the riblets (11, 12, 13).

4. Method according to any one of the preceding claims, **characterized in that** the oxide layer (15, 16) of at least the surface having the riblets (11, 12, 13) is coated by means of a plasma-assisted coating.

5. Method according to any one of the preceding claims, **characterized in that** the oxide layer (15, 16) of at least the surface having the riblets (11, 12, 13) comprises fluorinated polymers or modified silanes.

6. Method according to any one of the preceding claims, **characterized in that** the riblet foil (10) comprises trapezoidal, semicircular, streamlined or serrated riblets (11, 12, 13).

7. Method according to any one of the preceding claims, **characterized in that** the riblets comprise a size range with a riblet width of 30 µm to 80 µm, in particular 50 µm to 60 m µm, specifically 60 m µm.

8. Method according to any one of the preceding claims, **characterized in that** the height of a riblet (11, 12, 13) is half as great as the distance to a riblet (11, 12, 13) adjacent to it.

9. Component (20) contained in an aircraft, helicopter or missile, wherein to the component (20) at least one riblet foil is applied using the method according to any one of the preceding claims.

## Revendications

1. Procédé pour réaliser un composite à partir d'une feuille à "riblets" (10), dont au moins une face réduit la résistance vis-à-vis de l'écoulement d'air, et d'une pièce composite en fibres (20, 21), comprenant les étapes consistant à :
- préparer une feuille de métal (24) ;
- structurer la feuille de métal (24) par travail mécanique, de sorte qu'il se forme une feuille à riblets (10) avec une épaisseur entre 50 et 400 µm, laquelle inclut des "riblets" (11, 12, 13) sur au moins une surface, les riblets (11, 12, 13) étant agencés de telle façon qu'ils réduisent la résistance vis-à-vis de l'écoulement d'air lorsqu'un fluide s'écoule au-dessus de ceux-ci ;
- traiter la surface d'au moins une face de la feuille à riblets (10), ledit traitement de surface incluant une anodisation de la face opposée au riblets (11, 12, 13), afin de former une couche d'oxyde (16) présentant une structure poreuse avec des pores (17) de tailles et de profondeurs différentes, de sorte que l'ouverture des pores est entre 10 et 30 nm et la profondeur des pores va jusqu'à 300 nm, et
- appliquer la feuille à riblets (10) sur la pièce composite en fibres (21) avant le durcissement de celle-ci de telle façon que de la résine liquide (22) pénètre dans les pores (17), demeure dans les pores (17) lors du durcissement et devient solide, de sorte qu'il en résulte, après durcissement, une liaison à coopération de formes et à coopération de forces entre la feuille à riblets (10) et la pièce composite en fibres (21).

2. Procédé selon la revendication 1, **caractérisé en ce que** la couche d'oxyde (15) est imprégnée, sur la face présentant les riblets (11, 12, 13), au moyen d'un liquide hydrofuge et/ou répulsif pour les saletés.

3. Procédé selon l'une des revendications précédentes, **caractérisé en ce que** des matières solides hydrofuges et/ou répulsives pour les saletés sont introduites dans la couche d'oxyde (15, 16) au moins sur la face présentant les riblets (11, 12, 13).

4. Procédé selon l'une des revendications précédentes, **caractérisé en ce que** la couche d'oxyde (15, 16) est revêtue au moyen d'un revêtement appliqué au plasma, au moins sur la face présentant les riblets (11, 12, 13).

5. Procédé selon l'une des revendications précédentes, **caractérisé en ce que** la couche d'oxyde (15, 16) inclut des polymères fluorés ou des silanes modifiés, au moins sur la face présentant les riblets (11, 12, 13).

6. Procédé selon l'une des revendications précédentes, **caractérisé en ce que** la feuille à riblets (10) inclut des riblets (11, 12, 13) de forme trapézoïdale, de forme semi-circulaire, de forme aérodynamique ou de forme en dents de scie.

7. Procédé selon l'une des revendications précédentes, **caractérisé en ce que** les riblets couvrent une plage de taille avec une largeur de riblets de 30 à 80 µm, en particulier de 50 à 60 µm, et spécialement de 60 µm.

8. Procédé selon l'une des revendications précédentes, **caractérisé en ce que** la hauteur d'au moins un riblet (11, 12, 13) est la moitié de la distance à un riblet qui lui est voisin (11, 12, 13).

9. Pièce (20) contenue dans un avion, un hélicoptère, ou un aéronef, dans laquelle au moins une feuille à riblets est appliquée sur la pièce (20) au moyen du procédé selon l'une des revendications précédentes.
